# EUROPÄISCHE PATENTANMELDUNG

(11) **EP 0 708 312 A1**
(43) Veröffentlichungstag der Anmeldung: **24.04.1996**
(21) Anmeldenummer: 94116692.8
(22) Anmeldetag: 22.10.1994
(51) Int. Cl.: G01F 1/28

(54) **Durchflussmesser**

(71) Anmelder: Taco Armaturen AG, CH-8908 Urdorf (CH)
(72) Erfinder: Spiess, Fritz, CH-8918 Unterlunkhofen (CH)
(74) Vertreter: Blum, Rudolf Emil Ernst

(57) **Zusammenfassung**

Der bewegliche Teil (1,5,8) des Durchflussmessers ist durch das Strömungsmedium begrenzt drehbar und zwar gegen das Drillungsmoment einer Schraubenfeder (9). Hierfür ist der erwähnte bewegliche Teil (1,5,8) mit einer Turbineneinrichtung (1'') versehen, die vom Strömungsmedium (3) angetrieben wird. Der Durchflussmesser baut durch die Drehverstellung des erwähnten beweglichen Teiles (1,5,8), anstelle einer Axialverstellung, sehr niedrig, und durch ein Drillungsmoment der Schraubenfeder (9) in einen oder anderen Drehrichtung kann der Durchflussmesser für beide gegensätzliche Strömungsrichtungen verwendet werden.

## Beschreibung

Die Erfindung betrifft einen Durchflussmesser, der mit einem bewegbaren Anströmglied für ein zu messendes Strömungsmedium durch ein Messrohr hindurch, und mit einer mit dem Anströmglied verbundenen, innerhalb eines Gehäuses bewegbaren Stellungsanzeigestange versehen ist, die eine erste Schraubenfederabstützstelle aufweist, und mit einer zweiten Schraubenfederabstützstelle für eine zwischen diesen beiden Abstützstellen liegende Schraubenfeder, wobei das Anströmglied dazu bestimmt ist, innerhalb des Messrohres zu liegen, mit einem die Schraubenfeder umgebenden Gehäuse, das die zweite Schraubenfederabstützstelle aufweist, wobei einerseits die Stellungsanzeigestange und andererseits das Gehäuse eine aus Skala und Anzeigemarke bestehende Anzeigeeinrichtung aufweisen, zum Anzeigen der jeweiligen Stellung der Stellungsanzeigestange.

Ein solcher Durchflussmesser ist z.B. durch die DE-PS 35 09 718 bekannt. Es wird bezweckt, diesen bewährten Durchflussmesser zu verbessern, dahingehend, dass seine konstruktionsbedingte Baulänge verringert werden kann und gleichzeitig die Auflösung der Anzeigeeinrichtung vergrössert werden kann, also eine längere Skala vorhanden sein kann. Sowohl die kürzere Baulänge des Durchflussmessers, d.h. die Längenerstreckung in Richtung der Stellungsanzeigestange, als auch die grössere Auflösung der Anzeigeeinrichtung sind in der Praxis sehr erwünscht, da einerseits hierdurch der Durchflussmesser auch bei beschränkten Platzverhältnissen verwendet werden kann und andererseits die Ablesung der gemessenen Durchflussmenge genauer und leichter erfolgt.

Die erfindungsgemässe Ausbildung des Durchflussmessers ist dadurch gekennzeichnet, dass die beiden Schraubenfederabstützstellen polar gegeneinander verdrehbar sind zum Verdrillen der Schraubenfeder, und dass das Anströmglied mit einer Turbineneinrichtung versehen ist zum angetriebenen Drehen des Anströmgliedes durch das Strömungsmedium und damit Drehen der Stellungsanzeigestange gegen das Drillungsmoment der Schraubenfeder.

In der Zeichnung sind drei Ausführungsbeispiele des Erfindungsgegenstandes dargestellt. Es zeigen:
Figur 1 einen rechtwinklig zu einem Hauptleitungsabschnitt liegenden Durchflussmesser im Längsschnitt,
Figur 2 einen mit einem Verteilerventil kombinierten Durchflussmesser im Längsschnitt, und
Figur 3 eine weitere Ausführungsform des Durchflussmessers mit einer anderen Ausführungsform des Verteilerventils.

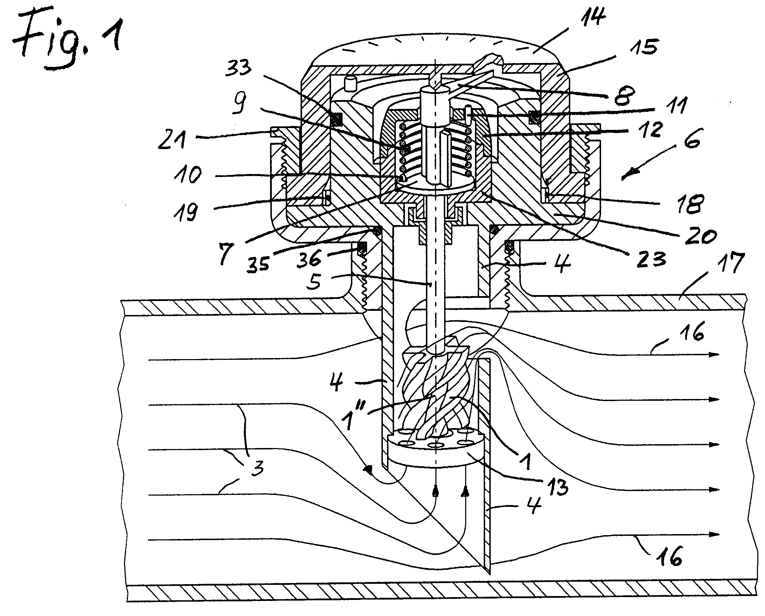

Der Durchflussmesser nach Figur 1 hat ein bewegbares Anströmglied 1 für ein zu messendes Strömungsmedium 3 durch ein Messrohr 4 hindurch. Es ist weiterhin eine Stellungsanzeigestange 5 vorhanden, die mit dem Anströmglied 1 drehfest verbunden ist. Die Stellungsanzeigestange 5 ist innerhalb eines zweiteiligen Gehäuses 6 drehbar gelagert. Die Stellungsanzeigestange 5 ist mit einer Querplatte 7 drehfest verbunden und trägt ebenfalls drehfest einen Zeiger 8. Zwischen der Querplatte 7 und dem Zeiger 8 wird die Stellunganzeigestange 5 von einer Schraubenfeder 9 umgeben, deren erste Schraubenfederabstützstelle 10 bei der Querplatte 7 liegt und die zweite Schraubenfederabstützstelle 11 bei einem Teil 12 des Gehäuses 6 liegt. Die beiden Federabstützstellen 10 und 11 sind hierbei so ausgebildet, dass die beiden Enden der Feder formschlüssig in Durchbrechungen der Querplatte 7 bzw. des Gehäuseteils 12 ragen. Die mit der Stellungsanzeigestange 5 drehfest verbundenen Bauteile 1, 7, 8 und 10 sind somit gegenüber dem Gehäuseteil 12 gegen das Drillungsmoment der Schraubenfeder 9 begrenzt drehbar. Der Antrieb für dieses Verdrehen erfolgt vom Strömungsmedium 3 und der Ausbildung des Anströmgliedes 1 als Turbine. Beim gezeigten Ausführungsbeispiel ist das Anströmglied 1 als Schraubenkolben mit mehreren Wendelgängen 1'' ausgebildet. Beim Beispiel sind vier Wendelgänge 1'' vorhanden. Das als Turbine ausgebildete Anströmglied 1 liegt also begrenzt drehbar innerhalb des Messrohres 4 und wird vom Strömungsmedium 3 durchströmt. Lediglich zur Führung und damit Beruhigung der Strömung ist dem Anströmglied 1 eine Lochplatte 12 vorgeschaltet, die undrehbar im Messrohr 4 gehalten ist.

Der erwähnte Zeiger 8 der Stellungsanzeigestange 5 stellt eine Anzeigemarke einer Anzeigeeinrichtung dar, deren Skala 14 sich an einem Gehäuseteil 15 befindet. Die bei der Stellungsanzeigestange vorhandene Federabstütztstelle 10 ist also polar gegenüber der beim Gehäuse 12 vorhandenen Federabstützstelle 11 verdrehbar, wobei die Schraubenfeder 9 verdrillt wird. Die jeweilige, gegen die Kraft der Feder 9 gedrehte Stellung der Stellungsanzeigestange 5 wird mit ihrem Zeiger 8 entlang der Skala 14 angezeigt. Beim Durchflussmesser nach Figur 1 wird das durch das Messrohr 4 hindurchtretende Strömungsmedium als Teilstrom gemessen. Zwischen dem gemessenen Teilstrom und dem ungemessenen Teilstrom 16 im Hauptleitungsabschnitt 17 herrscht ein angenähert konstantes Verhältnis entsprechend den jeweiligen hydraulischen Widerständen. Die aus Anzeigemarke (Zeiger 8) und Skala 14 bestehende Anzeigeeinrichtung kann in folgender Weise so geeicht werden, dass sie die Summe der beiden vorerwähnten Teilströme, d.h. den Gesamtstrom, anzeigt. Der Gehäuseteil 15 hat eine Innenverzahnung 18, die mit einer Aussenverzahnung 19 eines weiteren Gehäuseteils 20 kämmt. Beim Beispiel nach Figur 1 ist das Messrohr 4 und der Gehäuseteil 20 einstückig. Dieser einstückige Bauteil 4, 20 ist undrehbar gegenüber dem Hauptleitungsabschnitt 17 festgelegt. Der zumindest im Bereich der Skala 14 durchsichtige Gehäuseteil 15 kann mittels der Verzahnungen 18 und 19 in verschiedenen gedrehten Stellungen gegenüber dem Gehäuseteil 20 festgelegt werden. Hierzu wird eine Spannhülse 21 so weit herausgeschraubt, dass der Gehäuseteil 15 angehoben und gegenüber dem Gehäuseteil 20 verdreht werden kann. Hierdurch wird also die Skala 14 bezüglich der jeweiligen Stellung des Zeigers 8 zum Eichen des Durchflussmessers eingestellt. Dann wird wiederum über die Verzahnungen 18 und 19 der Bauteil 15 gegenüber dem Bauteil 20 drehfest montiert.

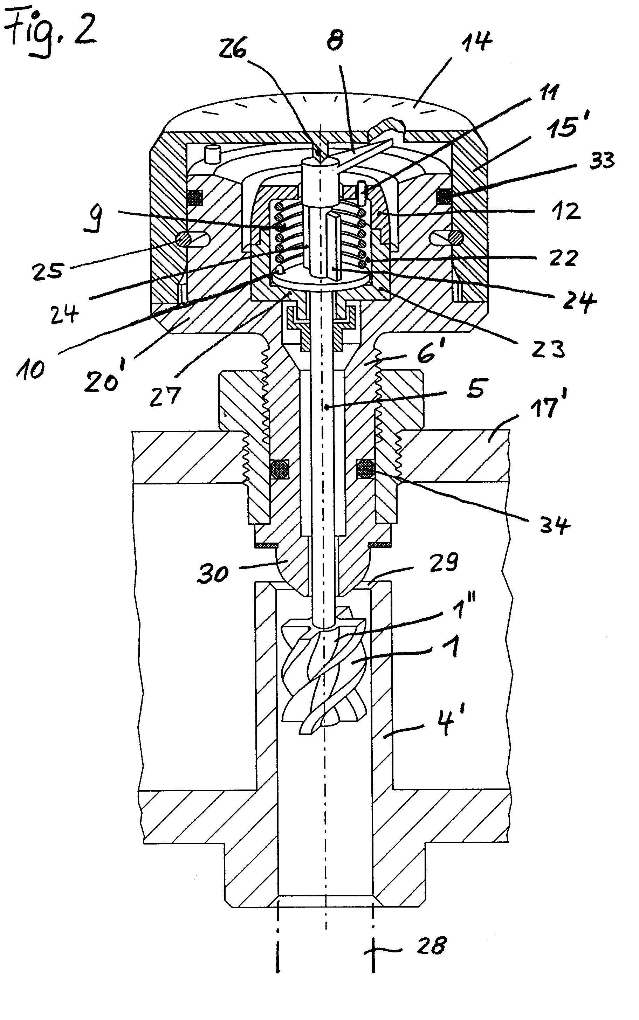

Die Schraubenfeder 9 befindet sich innerhalb einer Kammer 22, die von den Gehäuseteilen 12 und 23 umschlossen wird (Figur 2). Diese Kammer 22 ist mit dem Strömungsmedium gefüllt, so dass also keine speziellen Abdichtungen gegen ein Eindringen des Strömungsmediums vorgesehen werden müssen. Aus den Figuren 1 und 2 ist weiterhin ersichtlich, dass die Stellungsanzeigestange 5 durch diese Kammer 22 ragt, wobei auch hier keine Abdichtung zwischen Zeiger 8 und Gehäuseteil 12 notwendig ist. Die Stellungsanzeigestange 5 ist im Bereich der Kammer 22 mit einem Dämpfungsglied 24 versehen, das im gezeigten Beispiel aus zwei Prallplatten besteht, die sich längs der Drehachse der Stellungsanzeigestange 5 erstrekken. Diese beiden Prallplatten liegen also innerhalb der Feder 9 im Strömungsmedium (z.B. einer Flüssigkeit) und bewirken dann durch die Trägheit der Flüssigkeit eine Vermeidung einer schwingenden, vibrierenden Drehbewegung der Stellungsanzeigestange und damit des Zeigers 8. Der beim Beispiel nach Figur 2 zumindest im Bereich der Skala 14 durchsichtige Gehäuseteil 15' ist etwas anders ausgebildet als beim Beispiel nach Figur 1. Anstelle der Spannhülse 21 (Figur 1) ist nunmehr ein federnder Ring 25 für einen Schnappverschluss zwischen den beiden Bauteilen 20' und 15' vorhanden. Die Stellungsanzeigestange 5 ist mittels zwei gegensätzlich wirkenden axialen Drucklagern 26 und 27 im Gehäuse 6 abgestützt, zur Beaufschlagung der einen oder anderen der beiden Stirnseiten des Anströmgliedes 1 mit dem Strömungsmedium.

Beim Beispiel nach Figur 2 ist der erläuterte Durchflussmesser noch mit einem Verteilerventil kombiniert worden, wobei eine solche Kombination bereits durch die eingangs erwähnte DE-PS 35 09 718 bekannt ist. Derjenige Teil, der beim Beispiel nach Figur 1 als Gehäuse 6 bezeichnet worden ist (mit Ausnahme des Messrohres 4), wird nunmehr als Drehspindel (z.B. Schraubspindel) ausgebildet. Anstelle des Messrohres 4 ist beim Beispiel nach Figur 2 ein Querrohr 4' vorhanden, das Teil des Hauptleitungsabschnittes 17' ist. An das Querrohr 4' ist eine Zweigleitung 28 anschliessbar. Das Querrohr 4' hat einen Ventilsitz 29, der z.B. kreisförmig ist. In Figur 2 ist die erwähnte Drehspindel als axial verschraubbare Schraubspindel 6' ausgebildet, die im Hauptleitungsabschnitt 17' zwischen zwei Endstellungen verschraubbar ist. In der Darstellung nach Figur 2 ist die eine Endstellung der Schraubspindel 6' gezeigt, in der das Verteilerventil ganz geöffnet ist. Letzteres hat einen Ventilschliesskörper 30, der in der gezeigten Stellung ganz geöffnet ist. Das eingangs genannte Messrohr des Durchflussmessers ist nunmehr das Querrohr 4'. Beim Beispiel nach Figur 2 wird das im Querrohr 4' strömende Medium gemessen. Der Hauptleitungsabschnitt 17' dient als Sammel- oder Verteilerrohr.

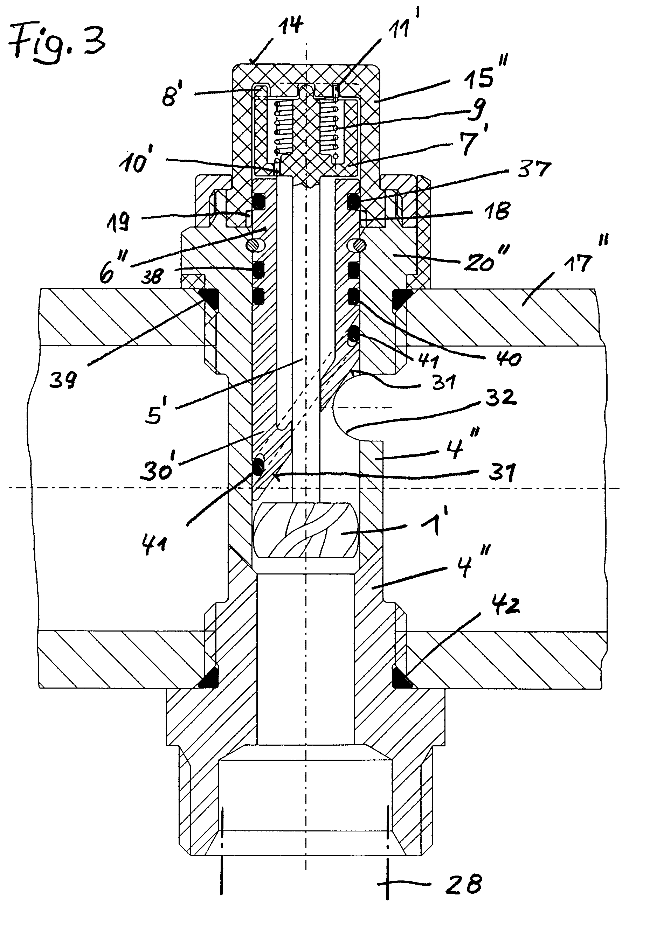

Beim weiteren Beispiel nach Figur 3 ist die bei Figur 2 erwähnte Drehspindel nicht mehr als Schraubspindel, sondern als Drehschieber ausgebildet, und der Durchflussmesser hat auch eine andere Ausgestaltung. Anstelle der Querplatte 7 ist nunmehr eine Büchse 7' mit der Stellungsanzeigestange 5' verbunden und trägt die erste Schraubenfederabstützstelle 10'. Die zweite Federabstützstelle 11' ist an einem Gehäuseteil 15'' vorhanden. Die Büchse 7' hat am oberen Ende einen Vorsprung 8' der, da er nur eine ganz geringe Erstreckung in Umfangsrichtung hat, die Wirkung eines Zeigers hat, also eine Anzeigemarke ist. Der Gehäuseteil 15'' ist zumindest an seinem oberen plattenförmigen Teil durchsichtig und trägt wiederum die Skala 14, so dass also die Anzeigemarke 8' entlang der Skala 14 sichtbar ist. Es ist wiederum eine Schraubenfeder 9 vorhanden. Zum Eichen der aus Skala 14 und Anzeigemarke 8' bestehenden Anzeigeeinrichtung dienen wiederum die Verzahnungen 18 und 19 zwischen dem Bauteil 15'' und dem Gehäuse 6''. Letzteres ist die Drehspindel, die in einem zweiteiligen Querrohr 4'' drehbar geführt ist. Im Querrohr 4'' befindet sich ebenfalls das Anströmglied 1'. Am Querrohr 4'' ist wiederum eine Zweigleitung 28 anschliessbar. Das Querrohr 4'' befindet sich im Hauptleitungsabschnitt 17''. Die als Drehschieber ausgebildete Drehspindel 6'' bildet am unteren Ende den Ventilschliesskörper 30', der eine schräg zum Querrohr 4'' liegende Steuerkante 31 aufweist. Das Querrohr 4'' hat in seiner Wandung eine radiale Ausnehmung 32, deren Rand den Ventilsitz bildet, so dass also diese Ausnehmung 32 durch die Steuerkante 31 beim Drehen des Drehschiebers 6'' mehr oder weniger abgedeckt und damit verschlossen wird, zur stufenlosen Veränderung des wirksamen Strömungsquerschnittes durch das Querrohr 4'' nach aussen in den Hauptleitungsabschnitt 17''. Beim Beispiel nach Figur 3 ist der in Figur 1 als Messrohr bezeichnete Bauteil 4 und der in Figur 2 als Querrohr 4' bezeichnete Bauteil zu einem Bauteil 4'' kombiniert worden, der den Hauptleitungsabschnitt 17'' ganz durchsetzt und somit aus Montagegründen in zweckmässiger Weise zweiteilig ausgebildet wird.

Bei der Ausbildung des Durchflussmessers nach Figur 1 steht das Messrohr 4 rechtwinklig zum Hauptleitungsabschnitt 17. Bei einer anderen, nicht dargestellten Ausführungsform könnte das Messrohr 4 auch geneigt zum Hauptleitungsabschnitt 17 liegen, und zwar in Figur 1 nach rechts geneigt. Hierdurch ergibt sich nicht mehr eine rechtwinklige Umlenkung der in Figur 1 gezeigten Teilmenge 3 zum Messrohr 4, sondern eine weniger starke Umlenkung dieser Teilmenge.

Bei einer weiteren, nicht dargestellten Verwendungsweise des Durchflussmessers nach Figur 1 könnte der Durchflussmesser auch in einer Bypass-Leitung angeordnet werden, wie es durch das DE-GM 82 20 193.5 bekannt ist.

Bei einer weiteren, nicht dargestellten Ausführungsform könnte beim Beispiel nach Fig. 3 die aus Anzeigemarke 8' und Skala 14 bestehende Anzeigeeinrichtung anders gestaltet werden. So könnte die äussere Mantelfläche der Büchse 7' die Skala aufweisen, die sich über den Umfang der Büchse 7' erstreckt, also quer zur Stellungsanzeige 5' liegt. Die durchsichtige Mantelfläche des Gehäuseteils 15'' würde dann eine Anzeigemarke, also z.B. einen axialen Strich aufweisen.

Der erfindungsgemässe Durchflussmesser kann in beiden Strömungsrichtungen des zu messenden Strömungsmediums verwendet werden. Das bedeutet, dass das Anströmglied 1 von seinen beiden Stirnseiten her vom Strömungsmedium anströmbar ist. Das Drillungsmoment der Schraubenfeder kann also in beiden Drehrichtungen benutzt werden. Im einen Fall wird die Schraubenfeder verstärkt gewunden, d.h. ihre Windungsanzahl wird vergrössert, und im anderen Fall wird ihre Windungsanzahl verringert. Je nach Verwendungszweck der Schraubenfeder wird der Durchflussmesser geeicht, indem der Bauteil 15, 15' oder 15'' in der entsprechenden Weise gegenüber dem Bauteil 20, 20' oder 6'' verstellt montiert wird.

Die beim Beispiel nach Figur 1 gezeigte Lochplatte 13 kann natürlich auch bei den Beispielen nach Figur 2 und 3 verwendet werden. Weiterhin kann eine solche Lochplatte 13 auch benachbart von beiden Stirnseiten des Anströmgliedes 1 liegen. Beim Durchflussmesser nach den Figuren 1 und 2 sind mehrere Dichtungsringe 33-36 vorhanden. Beim Drehschieber nach Figur 3 sind mehrere Dichtungsringe 37-42 vorhanden.

Die Lochplatte 13 kann verschiedene Ausbildungen haben; so kommt z.B. auch ein Maschengewebe oder ein Sieb in Frage.

## Patentansprüche

1. Durchflussmesser, der mit einem bewegbaren Anströmglied (1) für ein zu messendes Strömungsmedium (3) durch ein Messrohr (4,4',4'') hindurch, und mit einer mit dem Anströmglied (1) verbundenen, innerhalb eines Gehäuses (6) bewegbaren Stellungsanzeigestange (5,5') versehen ist, die eine erste Schraubenfederabstützstelle (10,10') aufweist, und mit einer zweiten Schraubenfederabstützstelle (11,11') für eine zwischen diesen beiden Abstützstellen (10,11;10',11') liegende Schraubenfeder (9), wobei das Anströmglied (1) dazu bestimmt ist, innerhalb des Messrohres (4,4',4'') zu liegen, mit einem die Schraubenfeder (9) umgebenden Gehäuse (12,15''), das die zweite Schraubenfederabstützstelle (11,11') aufweist, wobei einerseits die Stellungsanzeigestange (5,5') und andererseits das Gehäuse eine aus Skala (14) und Anzeigemarke (8,8') bestehende Anzeigeeinrichtung aufweisen, zum Anzeigen der jeweiligen Stellung der Stellungsanzeigestange (5,5'), dadurch gekennzeichnet, dass die beiden Schraubenfederabstützstellen (10,11;10',11') polar gegeneinander verdrehbar sind zum Verdrillen der Schraubenfeder (9), und dass das Anströmglied (1) mit einer Turbineneinrichtung (1'') versehen ist zum angetriebenen Drehen des Anströmgliedes (1) durch das Strömungsmedium (3) und damit Drehen der Stellungsanzeigestange (5,5') gegen das Drillungsmoment der Schraubenfeder (9).

2. Durchflussmesser nach Anspruch 1, wobei sich die Schraubenfeder (9) in einer Kammer (22) des Gehäuses (6) befindet, welche Kammer (22) mit dem Strömungsmedium gefüllt ist, wobei die Stellungsanzeigestange (5) in diese Kammer (22) ragt, dadurch gekennzeichnet, dass die Stellungsanzeigestange (5) mit einem bei ihrem Drehen im Strömungsmedium wirksamen Dämpfungsglied (24) versehen ist, zur Vermeidung einer vibrierenden Drehbewegung.

3. Durchflussmesser nach Anspruch 1 oder 2, dadurch gekennzeichnet, dass die Stellungsanzeigestange (5) die als Zeiger ausgebildete Anzeigemarke (8) trägt, die in einer Ebene bewegbar ist, und dass das Gehäuse (6) mit einer plan angeordneten Skala (14) versehen ist.

4. Durchflussmesser nach Anspruch 1, dadurch gekennzeichnet, dass die Turbineneinrichtung als Schraubenkolben (1,1') mit zumindest einem Wendelgang (1'') ausgebildet ist.

5. Durchflussmesser nach einem der Ansprüche 1-4, dadurch gekennzeichnet, dass das Gehäuse (6) zwei gegeneinander verstellbare Gehäuseteile (15,20;15',20') aufweist, wobei der eine Gehäuseteil (20,20') die zweite Schraubenfederabstützstelle (11) trägt und der andere Gehäuseteil (15,15') einen Teil (14) der Anzeigeeinrichtung trägt, zum Eichen des Durchflussmessers (Fig. 1,2)

6. Durchflussmesser nach Anspruch 2, dadurch gekennzeichnet, dass das Dämpfungsglied (24) als zumindest eine Prallplatte ausgebildet ist, die sich längs der Drehachse der Stellungsanzeigestange (5) erstreckt.

7. Durchflussmesser nach einem der Ansprüche 1-6, dadurch gekennzeichnet, dass die Stellungsanzeigestange (5) mittels zwei gegensätzlich wirkenden axialen Drucklagern (26,27) im Gehäuse (6) abgestützt ist zur Beaufschlagung der einen oder anderen der beiden Stirnseiten des Anströmgliedes (1) mit dem Strömungsmedium.

8. Durchflussmesser nach Anspruch 2 oder 6, dadurch gekennzeichnet, dass die Stellungsanzeigestange (5) eine in der Kammer (22) liegende Querplatte (7) aufweist, die mit der ersten Schraubenfederabstützstelle (10) versehen ist, und dass sich das Dämpfungsglied (24) innerhalb der Schraubenfeder (9) befindet.

9. Durchflussmesser nach einem der Ansprüche 1-8, dadurch gekennzeichnet, dass sich im Messrohr (4) eine der Turbineneinrichtung (1'') vorgeschaltete Lochplatte (13) befindet, zur Führung und damit Beruhigung der Strömung des Strömungsmediums (3).

10. Durchflussmesser nach einem der Ansprüche 1-9, mit einem Verteilerventil (29,30;31,32), dadurch gekennzeichnet, dass das Gehäuse (6',6'') als Drehspindel ausgebildet ist, die einen Ventilschliesskörper (30,31) für einen Ventilsitz (29,32) trägt, der bei einem Querrohr (4',4'') eines Hauptleitungsabschnitts (17',17'') vorhanden ist, wobei an das Querrohr eine Zweigleitung (28) anschliessbar ist und das Querrohr in den Hauptleitungsabschnitt mündet, dass sich das Anströmglied (1,1') des Durchflussmessers im als Messrohr dienenden Querrohr befindet, und dass sich die zweite Schraubenfederabstützstelle (11,11') bei der im Hauptleitungsabschnitt (17', 17'') drehbar gelagerten Drehspindel (6',6'') befindet (Fig. 2,3).

11. Durchflussmesser mit Verteilerventil nach Anspruch 10, dadurch gekennzeichnet, dass die Drehspindel als axial verschraubbare Schraubspindel (6') ausgebildet ist, so dass der Ventilschliesskörper (30) axial verstellbar ist, und dass der Ventilsitz (29) in einer Ebene quer zur Schraubspindel (6') liegt (Fig. 2).

12. Durchflussmesser mit Verteilerventil nach Anspruch 10, dadurch gekennzeichnet, dass die Drehspindel als Drehschieber (6'') ausgebildet ist, dessen Ventilschliesskörper eine Steuerkante (31) aufweist, die quer zum Querrohr (4'') liegt und drehbar ist, wobei das Querrohr in seiner Wandung eine radiale Ausnehmung (32) aufweist, deren Rand den Ventilsitz bildet (Fig. 3).
